# EUROPÄISCHE PATENTSCHRIFT

(11) **EP 2 184 622 B1**
(45) Veröffentlichungstag und Bekanntmachung des Hinweises auf die Patenterteilung: **16.02.2011**
(21) Anmeldenummer: 09012827.3
(22) Anmeldetag: 09.10.2009
(51) Int. Cl.: G01V 3/00

(54) **Sensor-Bedienkopf**
Sensor control panel
Tête de commande pour capteur

(30) Priorität: 07.11.2008 DE 202008014830 U
(43) Veröffentlichungstag der Anmeldung: 12.05.2010
(73) Patentinhaber: Ebinger, Klaus, 51149 Köln (DE)
(72) Erfinder: Ebinger, Klaus, 51149 Köln (DE)
(74) Vertreter: Heim, Hans-Karl

(56) Entgegenhaltungen:
- DE-U1- 9 114 716
- DE-U1- 9 114 716
- GB-A- 1 315 684
- US-A1- 2003 063 189
- US-A1- 2006 250 364
- US-A1- 2006 284 758

## Beschreibung

Die Erfindung betrifft einen Sensor-Bedienkopf mit einem rohrförmigen Griffkörper und einem rohrförmigen Bedienkörper. Der Bedienkörper ist im Wesentlichen quer zu dem rohrförmigen Griffkörper angeordnet. Außerdem sind der Griffkörper und der Bedienkörper einstückig ausgebildet.

Die Bedienung von handgeführten Sensoren, wie beispielsweise Metalldetektoren oder Magnometern, soll möglichst einfach und ergonomisch ausgeführt sein. Hierzu sind verschiedene Bedienelemente bekannt.

Beispielsweise ist in DE 85 32 192 U1 ein austauschbarer Bedienkopf für einen Metalldetektor beschrieben. Dieser Bedienkopf weist eine konische Form auf, die an den Seitenflächen zum Teil abgeplattet ist. Um verschiedene Funktionen realisieren zu können, sind mehrere verschiedene Bedienköpfe vorgesehen, die alternativ verwendet werden können.

Ein weiterer Sensor-Bedienkopf ist aus DE 91 14 716 U1 bekannt. Dieser Bedienkopf ist im Zusammenhang mit einem Metalldetektor beschrieben und weist verschiedene Einstellmöglichkeiten auf, um die Detektionseigenschaften des Metalldetektors zu beeinflussen.

Die bekannten Sensor-Bedienköpfe sind meist für große Metalldetektoren vorgesehen, die aufgrund ihrer Abmessung und ihres Gewichts mit zwei Händen gehandhabt und bedient werden müssen. Sie werden meist in aufwändiger Weise als Aluminium-Druckgussteil hergestellt, wobei eine anschließende mechanische Bearbeitung notwendig ist.

Aus der GB 1 315 684 ist ein Metalldetektor mit einem rohrförmigen Haltestab und einem einseitig hiervon hervorstehendem Griff bekannt.

US 2006/284758 A1 beschreibt eine Sensorvorrichtung mit einem Metalldetektor und einem Radardetektor und mit einem Steuerbereich zum Auswählen unterschiedlicher Betriebsmodi.

Der Erfindung liegt die **Aufgabe** zugrunde, einen Sensor-Bedienkopf zu schaffen, der eine einfache einhändige Bedienung ermöglicht.

Diese Aufgabe wird erfindungsgemäß durch einen Sensor-Bedienkopf mit den Merkmalen des Anspruchs 1 gelöst.

Weitere vorteilhafte Ausführungsformen sind in den abhängigen Ansprüchen, der Beschreibung sowie den Figuren und deren Beschreibung angegeben.

Gemäß dem Anspruch 1 weist ein erfindungsgemäßer Sensor-Bedienkopf an einer ersten Seite des rohrförmigen Bedienkörpers ein ringförmiges Stellglied auf. Ferner ist auf der Stirnseite der ersten Seite des Bedienkörpers ein weiteres Stellglied vorhanden. Dieses Stellglied ist scheibenförmig ausgeführt. Der Durchmesser des scheibenförmigen Stellgliedes ist kleiner als der Durchmesser der Stirnseite der ersten Seite des Bedienkopfes vorgesehen.

Ein Grundgedanke der Erfindung kann darin gesehen werden, die für den Betrieb und die Abstimmung des Sensors notwendigen Schalter und Eingabeeinrichtungen, im Allgemeinen als Stellglieder bezeichnet, derart anzuordnen, dass sie mit einer Hand bedient werden können. Hierzu ist auf der ersten Seite des röhrförmigen Bedienkörpers sowohl ein ringförmiges als auch ein scheibenförmiges Stellglied vorgesehen. Diese beiden Stellglieder können derart angeordnet sein, dass, wenn der Sensor am Griffkörper gehalten wird, der Daumen eines Nutzers im Bereich der beiden Stellglieder zu liegen kommt. Somit ist es einfach möglich, den Sensor weiterhin zu halten und gleichzeitig die beiden Stellglieder mit dem Daumen zu bedienen.

Unter rohrförmig im Sinne der Erfindung kann ein beliebiges längliches Gehäuse verstanden werden. Insbesondere ist hierbei ein zylinderförmiges Gehäuse mit einem runden Querschnitt zu verstehen. Es sind aber auch andere Querschnittsformen möglich, zum Beispiel die die einem Kreis angenähert sein können.

In einer bevorzugten Ausführungsform ist das erste ringförmige Stellglied als drehbarer Stufenschalter ausgeführt. Bei einem derartigen Stufenschalter ist es beispielsweise möglich, grobe Einstellungen bezüglich der Detektionseigenschaften vorzunehmen. Es können aber auch andere Betriebsarten damit eingestellt werden.

Ist das scheibenförmige Stellglied als Drehknopf ausgeführt, so ist es mit diesem möglich, eine Feinjustierung der, beispielsweise über das erste Stellglied, grob eingestellten Rahmenbedingungen vorzunehmen. Ein weiterer Vorteil der Ausführung als Drehknopf ist es, dass dieser einfach auch mit dem Daumen bedient werden kann.

Zur Ausgabe eines Detektionsergebnisses eines Sensors, beispielsweise eines Metalldetektors, sind verschiedene Anzeigeeinrichtungen möglich. Zum einen ist es möglich, die Detektionssignale optisch in Form von Lichtimpulsen oder Leuchtstärken auszugeben. Ebenso sind Anzeigeeinrichtungen über die gemessenen physikalischen Größen möglich. Bevorzugt ist jedoch bei dem Sensor-Bedienkopf, dass eine akustische Ausgabe vorgesehen ist. Diese kann beispielsweise auf der der ersten Seite des Bedienkopfes gegenüberliegenden Seite vorgesehen sein. Auf dieser zweiten Seite kann ein Signalgeber und/oder ein Lautsprecher eingebaut sein. Dieser Signalgeber und/oder Lautsprecher weist in einer bevorzugten Ausführungsform in etwa einen Durchmesser auf, der der Stirnseite des Bedienkopfes gleicht. Hierdurch entsteht kein überstehender Bereich am Bedienkörper, der bei Verwendung des erfindungsgemäßen Sensor-Bedienkopfes störend sein könnte.

In einer bevorzugten Ausführungsform ist der Signalgeber und/oder der Lautsprecher durch eine gelochte Drehscheibe abdeckbar. Mit dieser Drehscheibe ist es zum einen möglich, die Signallautstärke zu variieren, ohne eine aufwändige Elektronik für eine Steuerung des Lautsprechers oder des Signalgebers vorzusehen. Zum anderen kann die Drehscheibe auch derart ausgeführt sein, dass sie den Signalgeber beziehungsweise den Lautsprecher komplett abdecken kann. Hierdurch ist der Signalgeber und/oder der Lautsprecher beim Transport vor widrigen Umgebungseinflüssen, wie bei Regen oder in staubigen Umgebungen, geschützt.

Eine weitere Einstellmöglichkeit kann am Griffkörper im Bereich des Bedienkörpers vorgesehen sein. Hierzu bietet sich ein Wippschalter an, der beispielsweise in drei Positionen eingestellt werden kann. Dieser Schalter kann dazu verwendet werden, um verschiedene Betriebsarten des Sensors einzustellen. In einer bevorzugten Ausführungsform ist der Wippschalter schmutz- und/oder feuchtigkeitsdicht ausgeführt.

Beim Verwenden des Sensor-Bedienkopfes an einem mobilen Sensor, beispielsweise einem Pin-Pointer-Metalldetektor, ist es bevorzugt, wenn an einer ersten Stirnseite des Griffkörpers eine verschließbare Öffnung für ein Batteriefach vorgesehen ist. Hierdurch können die Batterien einfach ausgetauscht werden, ohne dass der Metalldetektor aufwändig auseinander gebaut werden müsste. Anschließend an den Sensor-Bedienkopf, auf der gegenüberliegenden Seite des Bedienfaches, erstrecken sich die eigentlichen Sensor-Bauelemente wie Spulen und dergleichen.

Das scheibenförmige Stellglied auf der Stirnfläche der ersten Seite des Bedienkörpers ist in einer bevorzugten Ausführungsform teilversenkt ausgeführt. Hierdurch besteht ein mechanischer Schutz des Stellgliedes, da dieses nur noch teilweise überstehend ausgeführt ist. So ist es vorgesehen, dass das scheibenförmige Stellglied derart in der Stirnfläche versenkt ist, dass es mit der Stirnfläche einen im Wesentlichen ebenen Abschluss bildet. Zur Bedienung ist ein Teil der Stirnfläche von Material ausgespart, so dass das Stellglied weiterhin gedreht werden kann.

Der Sensorbedienkopf kann aus einem strapazierfähigen Kunststoff hergestellt werden. Hierfür können auch handelsübliche Verbindungselement verwendet werden.

Die Erfindung wird nachfolgend anhand eines Ausführungsbeispiels und durch schematische Zeichnungen näher erläutert. In diesen Zeichnungen zeigen:
- Fig. 1: eine perspektivische Darstellung eines erfindungsgemäßen Sen- sor-Bedienkopfes;
- Fig. 2: eine Ansicht von oben auf einen erfindungsgemäßen Sensor- Bedienkopf;
- Fig. 3: eine perspektivische Darstellung von hinten eines erfindungsge- mäßen Sensor-Bedienkopfes mit geschlossenem Batteriefach; und
- Fig. 4: eine perspektivische Darstellung von hinten eines erfindungsge- mäßen Sensor-Bedienkopfes mit geöffnetem Batteriefach.

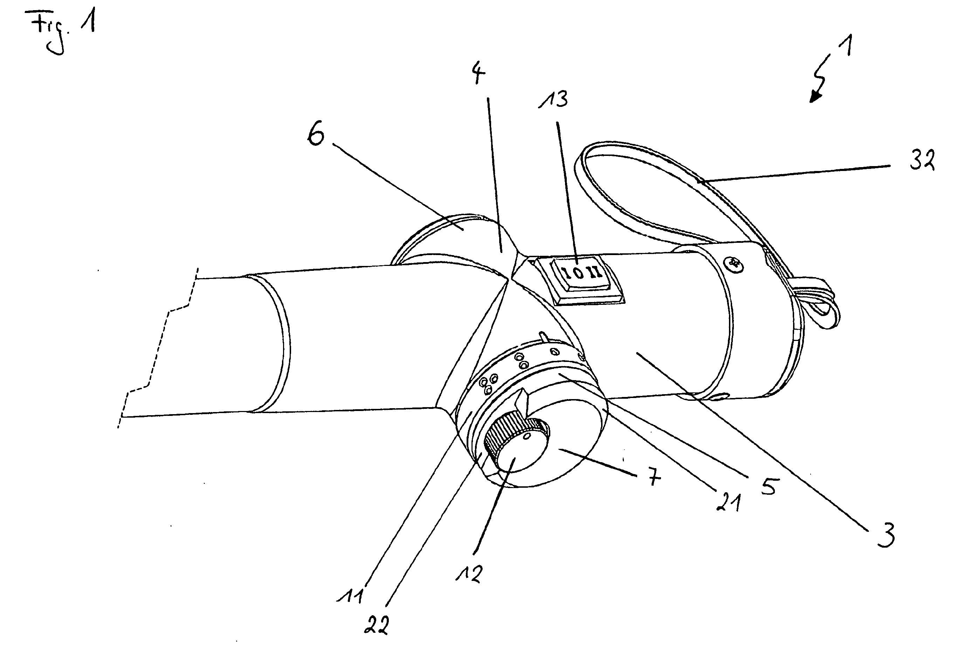

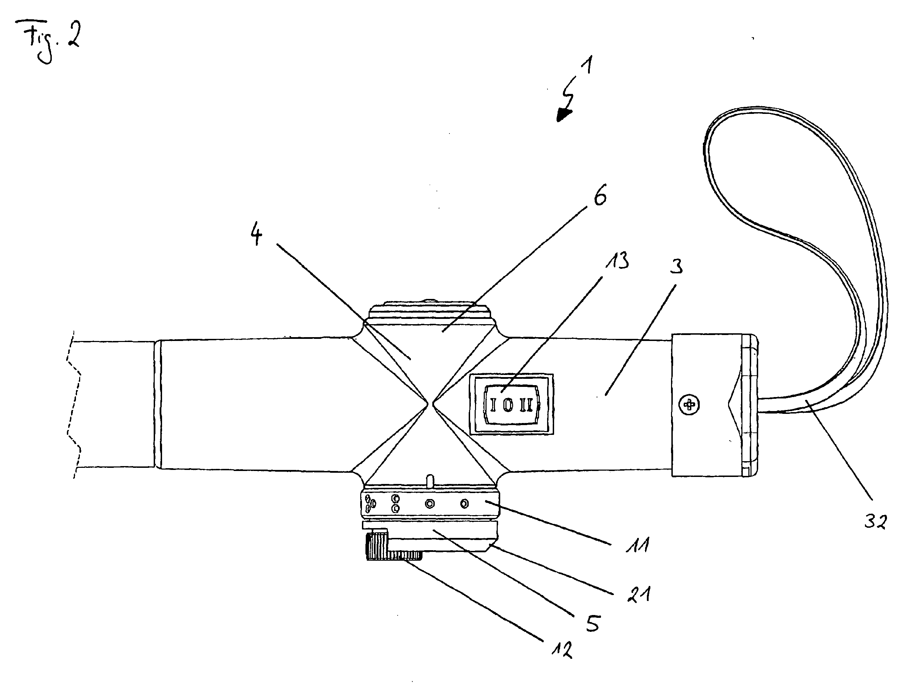

In den beiden Figuren 1 und 2 ist ein erfindungsgemäßer Sensor-Bedienkopf 1 dargestellt. Der Bedienkopf 1 weist die Grundform eines Kreuzes auf und kann demnach auch als Kreuzkopf bezeichnet werden. Hierbei wird das Kreuz durch den Griffkörper 3 und einem quer dazu vorgesehenen Bedienkörper 4 ausgebildet. Der Griffkörper 3 ist länger als der Bedienkörper 4 ausgeführt. Der Sensor-Bedienkopf 1 ist bevorzugt aus einem strapazierfähigen Kunststoff hergestellt.

In Querrichtung des Sensor-Bedienkopfes 1 sind im Wesentlichen die Bedien- und Signalelemente angeordnet. Diese Querrichtung des Sensor-Bedienkopfes 1 besteht hauptsächlich aus dem Bedienkörper 4. Der Bereich in Längsrichtung des Bedienkörpers 4, der im Wesentlichen aus dem Griffkörper 3 besteht, dient zur Aufnahme von Batterien und der Geräteelektronik, um die hier nicht mehr dargestellten Sensoren wie Spulen zu betreiben.

Als Bedienelemente des Sensor-Bedienkopfes 1 sind auf dem Bedienkörper 4 ein drehbarer Stufenschalter 11 und ein Drehknopf 12 angebracht. Auf dem Griffkörper 3, etwas hinter dem Bedienkörper 4 ist ein Wippschalter 13 angebracht. Der drehbare Stufenschalter 11 ist als ringförmiges Stellelement auf der ersten Seite des Bedienkörpers vorgesehen. Hierbei ist der Stufenschalter 11 derart ausgeführt, dass er nicht wesentlich über den Bedienkörper 4 hinaus steht.

Auf der ersten Seite 5 des Bedienkörpers 4 ist auf der Stirnfläche 7 der Drehknopf 12 vorgesehen. Dieser Drehknopf 12 kann beispielsweise zur Feinjustage der Sensoren beziehungsweise deren Abstimmung verwendet werden. Um den Drehknopf 12 zu schützen, ist der zumindest teilweise vertieft in der Stirnfläche 7 angeordnet. Hierbei ist eine Aussparung 22 vorgesehen, wodurch der Drehknopf 12 leichter zu bedienen ist. Hierzu ist ein Teil des Materials aus der Stirnfläche 7 sowie deren Abschrägung 21 entfernt, so dass ein seitlicher Zugriff zu dem Drehknopf 12 möglich ist.

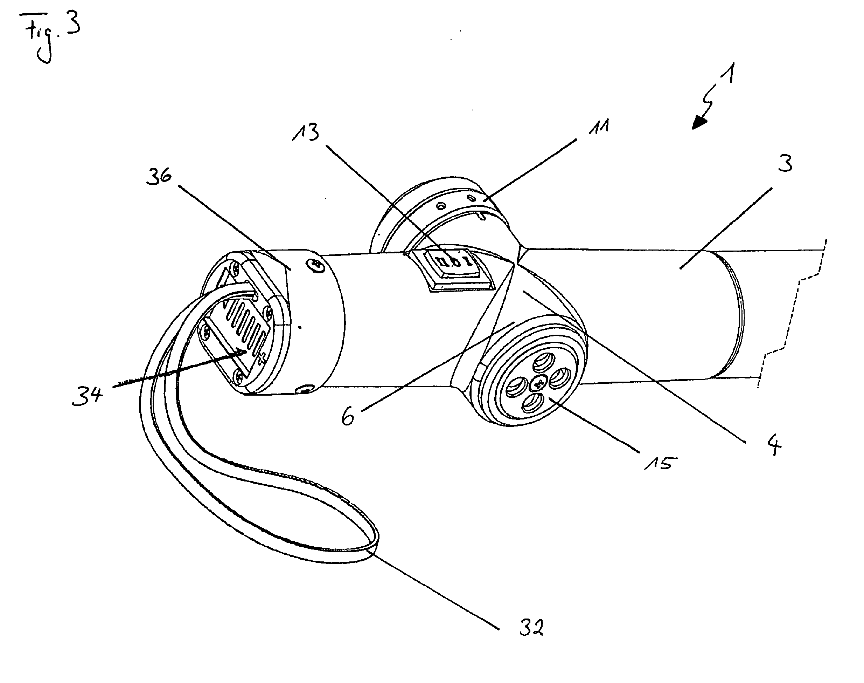

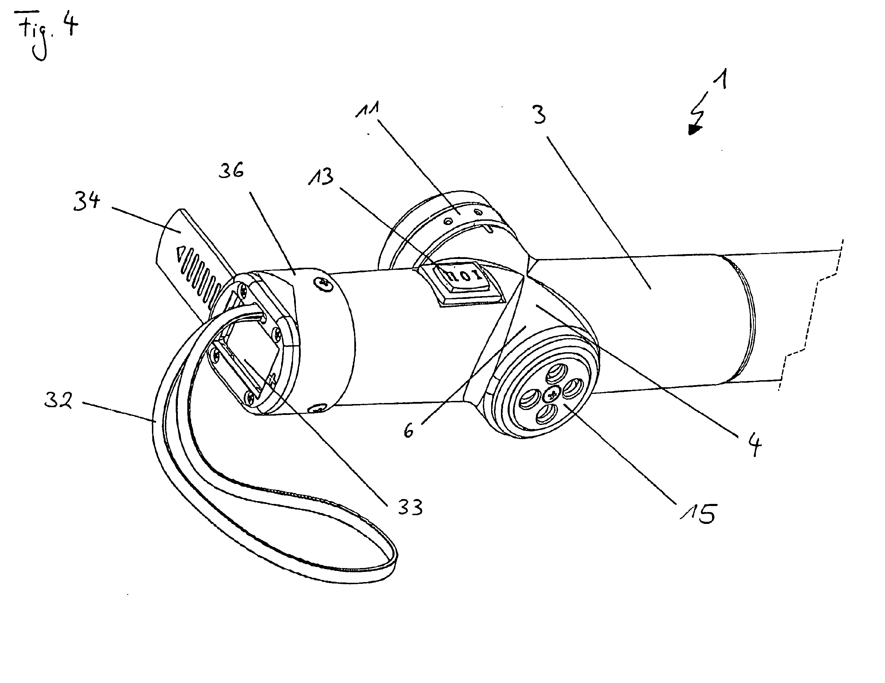

In den Figuren 3 und 4 ist der Sensor-Bedienkopf 1 aus Figuren 1 und 2 in rückwärtigen Ansichten dargestellt. Hierbei ist in Fig. 3 ein Batteriefach 33 durch eine Batteriefachabdeckung 34 verschlossen ausgeführt. In Fig. 4 ist die Batteriefachabdeckung 34 zur Seite geschoben, so dass Batterien in das Batteriefach 33 eingesetzt werden können. Die Batteriefachabdeckung 34 befindet sich an dem Endstück 36, welches auf das Ende des Griffkörpers 3 geschoben werden kann und dort fixiert ist. An dem Endstück 36 ist eine Handschlaufe 32 angebracht.

Auf der zweiten Seite 6 des Bedienkörpers 4, gegenüberliegend des Drehknopfes 11, ist eine gelochte Drehscheibe 15 vorgesehen. Diese Drehscheibe 15 deckt einen Signalgeber ab. Über eine Drehung der Drehscheibe 15 ist es möglich, die Öffnungen des Signalgebers oder eines Lautsprechers zu beeinflussen und damit die Lautstärke zu variieren. Die Drehscheibe 15 und der darunter liegende, hier nicht zu sehende Signalgeber beziehungsweise Lautsprecher sind derart ausgeführt, dass eine Stellung der Drehscheibe 15 vorgesehen ist, in der der Signalgeber beziehungsweise der Lautsprecher komplett verschlossen oder abgedeckt ist. Diese Stellung kann auch als TransportStellung bezeichnet werden und schützt die darunter liegende Elektronik vor Verschmutzung und weiteren äußeren Einflüssen.

Der hier dargestellte Sensor-Bedienkopf 1 ist für eine standardmäßige Bedienung durch einen Rechtshänder vorgesehen. Hierbei wird der Sensor-Bedienkopf 1 mit dem sich daran befindlichen Sensor in der rechten Hand gehalten. Dabei liegt der Daumen im Bereich der ersten Seite 5 des Bedienkörpers 4. Hierdurch ist es möglich, sowohl den drehbaren Stufenschalter 11 wie auch den Drehknopf 12 zu betätigen, ohne dass ein Umgreifen für die Betätigung notwendig ist. So kann während des Suchvorgangs die Sensorkonfiguration geändert werden.

Auch der Wippschalter 13 ist derart angebracht, dass er leicht durch den Daumen betätigt werden kann.

Mit dem erfindungsgemäßen Sensor-Bedienkopf ist es somit möglich, einen Sensor, wie einen Metalldetektor, in einer einfachen Art und Weise einhändig zu bedienen. Hierdurch kann die zweite Hand für andere Zwecke, zum Beispiel zum Halten, Tragen oder Schwenken des Metalldetektors, verwendet werden.

## Patentansprüche

1. Sensor-Bedienkopf
mit einem rohrförmigen Griffkörper (3) und
mit einem zum rohrförmigen Griffkörper (3) quer angeordneten rohrförmigen Bedienkörper (4),
wobei auf der Stirnseite (7) einer ersten Seite (5) des Bedienkörpers (4) ein scheibenförmiges Stellglied (12) vorhanden ist, welches als Drehknopf (12) ausgeführt ist, und
wobei der Durchmesser des scheibenförmigen Stellgliedes (12) kleiner als der Durchmesser der Stirnseite (7) der ersten Seite (5) des Bedienkopfes (1) ist, **dadurch gekennzeichnet,**
**dass** der rohrförmige Griffkörper (3) und der rohrförmige Bedienkörper (4) einstückig ausgebildet sind,
**dass** an der ersten Seite (5) des rohrförmigen Bedienkörpers (4) ein ringförmiges Stellglied (11) angeordnet ist, welches als drehbarer Stufenschalter (11) ausgeführt ist, und
**dass** das scheibenförmige Stellgliedteil (12) teilweise versenkt in der Stirnfläche (7) der ersten Seite (5) des Bedienkörpers (4) angeordnet ist, wobei ein Teil des Materials aus der Stirnfläche (7) entfernt ist, so dass ein seitlicher Zugriff zu dem scheibenförmigen Stellglied (12) möglich ist.

2. Sensor-Bedienkopf nach Anspruch 1 ,
**dadurch gekennzeichnet,**
**dass** an der der ersten Seite (5) des Bedienkörper (4) gegenüberliegenden Stirnseite ein Signalgeber und/oder ein Lautsprecher vorgesehen ist/sind.

3. Sensor-Bedienkopf nach Anspruch 2,
**dadurch gekennzeichnet,**
**dass** der Signalgeber und/oder der Lautsprecher durch eine gelochte Drehscheibe (15) abdeckbar ist/sind.

4. Sensor-Bedienkopf nach einem der Ansprüche 1 bis 3,
**dadurch gekennzeichnet,**
**dass** auf dem Griffkörper (3) im Bereich des Bedienkörpers (4) ein Schalter (13) vorgesehen ist.

5. Sensor-Bedienkopf nach einem der Ansprüche 1 bis 4,
**dadurch gekennzeichnet,**
**dass** am Griffkörper (3) an einer ersten Stirnseite eine verschließbare Öffnung für ein Batteriefach (33) vorgesehen ist.

## Claims

1. Sensor operating head
comprising a tubular gripping body (3) and
a tubular operating body (4) arranged transversely to the tubular gripping body (3), whereby on the front side (7) of a first side (5) of the operating body (4) a disk-shaped setting member (12) is present, which is designed as a rotary knob (12), and
whereby the diameter of the disk-shaped setting member (12) is smaller than the diameter of the front side (7) of the first side (5) of the operating head (1), **characterized in that**
the tubular gripping body (3) and the tubular operating body (4) are designed integrally,
**in that** on the first side (5) of the tubular operating body (4) a ring-shaped setting member (11) is arranged, which is designed as a rotatable step switch (11), and **in that** the disk-shaped setting member (12) is arranged partially sunk into the front side (7) of the first side (5) of the operating body (4), whereby a part of the material is removed from the front side (7) so that lateral access to the disk-shaped setting member (12) is possible.

2. Sensor operating head according to claim 1,
**characterized in that**
at the front side lying opposite the first side (5) of the operating body (4) a signal generator and/or a loudspeaker is/are provided.

3. Sensor operating head according to claim 2,
**characterized in that**
the signal generator and/or the loudspeaker can be covered by a perforated rotary disk (15).

4. Sensor operating head according to any one of claims 1 to 3, **characterized in that**
on the gripping body (3) in the area of the operating body (4) a switch (13) is provided.

5. Sensor operating head according to any one of claims 1 to 4, **characterized in that**
on the gripping body (3) at a first front side a closable opening for a battery compartment (33) is provided.

## Revendications

1. Tête de commande pour capteur
avec un corps de préhension (3) tubulaire et
avec un corps de commande (4) tubulaire disposé transversalement au corps de préhension tubulaire (3),
dans lequel un organe de manoeuvre (12) en forme de disque est présent sur la face frontale (7) d'une première face (5) du corps de commande (4), organe qui est réalisé sous forme de bouton rotatif (12), et
dans lequel le diamètre de l'organe de manoeuvre (12) en forme de disque est inférieur au diamètre de la face frontale (7) de la première face (5) de la tête de commande (1),
***caractérisée***
***en ce que*** le corps de préhension tubulaire (3) et le corps de commande tubulaire (4) sont réalisés en une seule pièce,
***en ce que**,* sur la première face (5) du corps de commande tubulaire (4), est placé un organe de manoeuvre annulaire (11) qui est conformé en graduateur rotatif (11), et
***en ce que*** la pièce de l'organe de manoeuvre (12) est partiellement enfoncée dans la face frontale (7) de la première face (5) du corps de commande (4), une partie du matériau de la face frontale (7) étant retirée, de telle sorte qu'un accès latéral à l'organe de manoeuvre (12) en forme de disque soit possible.

2. Tête de commande selon la revendication 1,
***caractérisée en ce que*** sur la face frontale en vis-à-vis de la première face (5) du corps de commande (4) est/sont prévu(s) un codeur de signaux et/ou un haut-parleur.

3. Tête de commande selon la revendication 2,
***caractérisée en ce que*** le codeur de signaux et/ou le haut-parleur peut/peuvent être recouvert(s) par un disque rotatif perforé (15).

4. Tête de commande selon l'une quelconque des revendications 1 à 3, ***caractérisée en ce qu*'**un commutateur (13) est prévu sur le corps de préhension (3) au niveau du corps de commande (4).

5. Tête de commande selon l'une quelconque des revendications 1 à 4, ***caractérisée en ce qu*'**une ouverture refermable pour un compartiment (33) pour des piles est prévue sur le corps de préhension (3) au niveau d'une première face frontale.
